# EUROPEAN PATENT APPLICATION

(11) **EP 4 546 283 A1**
(43) Date of publication of application: **30.04.2025**
(21) Application number: 23206094.7
(22) Date of filing: 26.10.2023
(51) Int. Cl.: G06V 10/82, G06N 3/045, G06V 20/56

(54) **A COMPUTER IMPLEMENTED METHOD FOR PROVIDING A PERCEPTION MODEL FOR ANNOTATION OF TRAINING DATA**

(71) Applicant: Zenseact AB, 417 56 Göteborg (SE)
(72) Inventor: VERBEKE, Willem, 412 60 Göteborg (SE); FRÄNDBERG, Vilhelm, 416 61 Göteborg (SE)
(74) Representative: Zacco Sweden AB

(57) **Abstract**

The present invention relates to a computer-implemented method (100) for providing an offline perception model for subsequent annotation of training data for use in training of an online perception model, as well as a device (300) thereof. The method (100) comprises: training (S102) a foundation model, using a first training dataset, to predict a trajectory of a vehicle based on a sensor data sequence, wherein the sensor data sequence comprises sensor data pertaining to a surrounding environment of the vehicle, and wherein the first training dataset comprises sensor data sequences and information indicative of a driven trajectory associated with a respective sensor data sequence; forming (S104) the offline perception model by adding a task-specific layer to the trained foundation model, wherein the task-specific layer is configured to perform a perception task of the offline perception model; and fine-tuning (S106) the offline perception model, using a second training dataset, to perform the perception task, wherein the second training dataset comprises sensor data annotated for said perception task. The invention further relates to a method for annotating data for use in subsequent training of an online perception model, as well as a device thereof.

## Description

### TECHNICAL FIELD

The present inventive concept relates to the field of autonomous vehicles. In particular, it is related to methods and devices for annotation of training data for use in training of a perception model.

### BACKGROUND

With the development of technology in recent years, image capturing and processing techniques have become widely used in different fields of technology. In particular, vehicles produced today are commonly equipped with some form of vision or perception system for enabling new functionalities. Moreover, an increasing portion of modern vehicles has advanced driver-assistance systems (ADAS) to increase vehicle safety and more generally road safety. ADAS - which for instance may be represented by adaptive cruise control (ACC), collision avoidance system, forward collision warning, lane support systems, etc. - are electronic systems that may aid a driver of the vehicle. Today, there is ongoing research and development within a number of technical areas associated to both the ADAS and the Autonomous Driving (AD) field. ADAS and AD may also be referred to under the common term Automated Driving System (ADS) corresponding to all of the different levels of automation as for example defined by the SAE J3016 levels (0 - 5) of driving automation.

Some functions of these system can be implemented using simple rule-based techniques. However, to handle the complexity of real-world driving scenarios, which involves varying road conditions, unpredictability in human or non-human behavior, and rapidly changing environments, the use of machine learning models has proven to enhance the safety, capability and performance of the ADS. Machine learning models, such as deep learning models or neural networks are especially useful as part of the perception system of the ADS for e.g. detecting, identifying, or tracking objects in the surrounding environment of the vehicle.

Solving the perception tasks necessary to achieve autonomous driving with deep learning algorithms requires a vast quantity of labeled training data. Such datasets need to cover any imaginable scenario that might present itself while driving. Collecting the data is a relatively easy task. However, annotating the data to make it useful for training of a machine learning model is many orders of magnitude more expensive, as it typically requires human involvement. These problems are only made worse when moving to spatiotemporal models which require annotated sequence data, bringing a new dimension to the annotation cost. One of the holy grails in the development of AD is therefore to find ways of doing this in an automated manner. The present inventive concept provides techniques for acquiring high-fidelity annotation in a more automated manner, which can remove or drastically reduce the need for human involvement.

### SUMMARY

The herein disclosed technology seeks to mitigate, alleviate, or eliminate one or more of the above-identified deficiencies and disadvantages in the prior art to address various problems relating to acquiring annotated training data. Recent advances in large language models have demonstrated the fact that deep learning is at its most powerful when there is no clear limitation to the scale of the model or the size of its input dataset. A demonstration of this are large language models, such as Generative Pre-trained Transformers, or GPT for short. The inventors have realized that these aspects can be utilized also in other areas, such as in the field of autonomous driving development for annotation of data. The presently disclosed technology at least partly builds upon leveraging easy to collect data to train an offline model to be able to annotate training data which then can be used to train an online (or production) model used in a vehicle equipped with an automated driving system, ADS. By increasing the availability of high-fidelity annotated data, the subsequent training of online models can be improved, as they are able to learn from more data.

As stated above, data collection is orders of magnitude cheaper than annotations. For this reason, the presently disclosed technology leverages data that need not to be explicitly labeled. The essential problem then becomes defining an objective function for a model that enables it to leverage this vast amount of unlabeled data, while building an understanding of the world around the vehicle that can be used to solve relevant AD tasks, such as object or lane tracking. The proposed technology thereby allows one to train a model for offline auto-annotation which is limited only by the amount of raw data collected, e.g. by test vehicles or a fleet of vehicles, and the available computational resources for training, rather than the resources for human annotation. The proposed objective function for an offline perception model for subsequent annotation of training data is herein selected as the problem of predicting a trajectory of a vehicle based on a sensor data sequence comprising sensor data pertaining to a surrounding environment of the vehicle.

Various aspects and embodiments of the disclosed invention are defined below and in the accompanying independent and dependent claims.

According to a first aspect, there is provided a computer-implemented method for providing an offline perception model for subsequent annotation of training data. The training data may in turn be used in training of an online perception model. The method comprises training a foundation model, using a first training dataset, to predict a trajectory of a vehicle based on a sensor data sequence. The sensor data sequence comprises sensor data pertaining to a surrounding environment of the vehicle. The first training dataset comprises sensor data sequences and information indicative of a driven trajectory associated with a respective sensor data sequence. The method further comprises forming the offline perception model by adding a task-specific layer to the trained foundation model. The task-specific layer is configured to perform a perception task of the offline perception model. The method further comprises fine-tuning the offline perception model, using a second training dataset, to perform the perception task. The second training dataset comprises sensor data annotated for said perception task.

According to a second aspect, there is provided a computer program product comprising instructions which when the program is executed by a computing device, causes the computing device to carry out the method according to any embodiment of the first aspect. According to an alternative embodiment of the second aspect, there is provided a (non-transitory) computer-readable storage medium. The non-transitory computer-readable storage medium stores one or more programs configured to be executed by one or more processors of a processing system, the one or more programs comprising instructions for performing the method according to any embodiment of the first aspect. Any of the above-mentioned features and advantages of the first aspect, when applicable, apply to the second aspect as well. In order to avoid undue repetition, reference is made to the above.

According to a third aspect, there is provided a device for providing an offline perception model for subsequent annotation of training data. The training data may be used in training of an online perception model. The device comprises control circuitry. The control circuitry is configured to train a foundation model, using a first training dataset, to predict a trajectory of a vehicle based on a sensor data sequence. The sensor data sequence comprises sensor data pertaining to a surrounding environment of the vehicle. The first training dataset comprises sensor data sequences and information indicative of a driven trajectory associated with a respective sensor data sequence. The control circuitry is further configured to form the offline perception model by adding a task-specific layer to the trained foundation model. The task-specific layer is configured to perform a perception task of the offline perception model. The control circuitry is further configured to fine-tune the offline perception model, using a second training dataset, to perform the perception task. The second training dataset comprises sensor data annotated for said perception task. Any of the above-mentioned features and advantages of the other aspects, when applicable, apply to this third aspect as well. In order to avoid undue repetition, reference is made to the above.

According to a fourth aspect, there is provided a computer-implemented method for annotating data for use in subsequent training of an online perception model. The online perception model is configured to perform a perception task of a vehicle equipped with an automated driving system. The method comprises obtaining sensor data pertaining to a physical environment. The method further comprises determining a perception output by inputting the obtained sensor data into an offline perception model provided by the method according to any embodiment of the first aspect. The method further comprises storing the sensor data together with the perception output as annotation data for subsequent training of the online perception model. Any of the above-mentioned features and advantages of the other aspects, when applicable, apply to this fourth aspect as well. In order to avoid undue repetition, reference is made to the above.

According to a fifth aspect, there is provided a computer program product comprising instructions which when the program is executed by a computing device, causes the computing device to carry out the method according to any embodiment of the fourth aspect. According to an alternative embodiment of the fifth aspect, there is provided a (non-transitory) computer-readable storage medium. The non-transitory computer-readable storage medium stores one or more programs configured to be executed by one or more processors of a processing system, the one or more programs comprising instructions for performing the method according to any embodiment of the fourth aspect. Any of the above-mentioned features and advantages of the other aspects, when applicable, apply to this fifth aspect as well. In order to avoid undue repetition, reference is made to the above.

According to a sixth aspect, there is provided a device for annotating data for use in subsequent training of an online perception model. The online perception model is configured to perform a perception task of a vehicle equipped with an automated driving system. The device comprises control circuitry. The control circuitry is configured to obtain sensor data pertaining to a physical environment. The control circuitry is further configured to determine a perception output by inputting the obtained sensor data into an offline perception model provided by the method according to any embodiment of the first aspect. The control circuitry is further configured to store the sensor data together with the perception output as annotation data for subsequent training of the online perception model. Any of the above-mentioned features and advantages of the other aspects, when applicable, apply to this sixth aspect as well. In order to avoid undue repetition, reference is made to the above.

The term "non-transitory," as used herein, is intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link. Thus, the term "non-transitory", as used herein, is a limitation of the medium itself (i.e., tangible, not a signal) as opposed to a limitation on data storage persistency (e.g., RAM vs. ROM).

The disclosed aspects and preferred embodiments may be suitably combined with each other in any manner apparent to anyone of ordinary skill in the art, such that one or more features or embodiments disclosed in relation to one aspect may also be considered to be disclosed in relation to another aspect or embodiment of another aspect. Moreover, any advantages mentioned in connection with one aspect, when applicable, applies to the other aspects as well.

As stated previously, the presently disclosed technology may be advantageous in that it enables annotation of training data with less need for human involvement. Aside from a relatively small training dataset of annotated data (second training dataset compared to first training dataset), the offline perception model used for annotating data can be provided using vast amounts of data which do not require explicit annotations. Thus, one can simply drive vehicles with appropriate sensor setups around and collect the sensor data sequence while also recording the driven trajectory. The recorded driven trajectory can then be used as automatic annotations for training the foundation model. Thus, high fidelity annotations of training data, which can be used in training of the online perception model, can subsequently be generated in a more time efficient way, and in quantities much greater than was previously feasible with today's technologies. This may in turn improve the subsequent training of the online perception model, in that a larger and more versatile training dataset can be used. An effect of utilizing implicitly annotated data and/or imitation learning of the foundation model makes it easy to collect these vast amounts of data with little to no effort. Moreover, by deploying the perception model used for data annotation as an offline model allows for pushing the model and dataset size to new heights. An effect of the above aspects may be that the offline perception model can learn the complex task of predicting a trajectory of a vehicle based on a sensor data sequence provided as input to the model. Solving this task on a sufficiently large and varied dataset can result in a model that can understand the dynamics of the environment and learn the temporal evolution of the scene. Thus, the offline perception model provided by the present technology may be more powerful (e.g. in the sense of capability, accuracy and general performance) than any auto-annotation model trained only on a limited set of human labeled data in accordance with what is known today. The provided offline perception model is also more powerful than models trained with contrastive loss or classification tasks since these objectives do not directly supersede the relevant AD tasks which the online perception model is intended to perform. In other words, the offline perception model can learn to minimize a contrastive loss without having a general understanding of object tracking or other perception tasks.

In summary, a very powerful foundation model can be trained on any sensor data sequences for which the driven trajectory is stored. Such a model will contain powerful representations of the perceived environment around the car, which can in turn be leveraged to train a powerful offline perception model which then can be utilized for auto annotations.

Further embodiments are defined in the dependent claims. It should be emphasized that the term "comprises/comprising" when used in this specification is taken to specify the presence of stated features, integers, steps, or components. It does not preclude the presence or addition of one or more other features, integers, steps, components, or groups thereof.

These and other features and advantages of the disclosed technology will, in the following, be further clarified with reference to the embodiments described hereinafter.

### BRIEF DESCRIPTION OF THE DRAWINGS

The above aspects, features and advantages of the disclosed technology, will be more fully appreciated by reference to the following illustrative and non-limiting detailed description of example embodiments of the present disclosure, when taken in conjunction with the accompanying drawings, in which:
Figure 1 is a schematic flowchart representation of a method for providing an offline perception model for subsequent annotation of training data, according to some embodiments.
Figure 2 is a schematic flowchart representation of a method for annotating data for use in subsequent training of an online perception model, according to some embodiments.
Figure 3 is a schematic illustration of a device for providing an offline perception model for subsequent annotation of training data, according to some embodiments.
Figure 4 is a schematic illustration of a device for annotating data for use in subsequent training of an online perception model, according to some embodiments.
Figure 5 is a schematic illustration of a vehicle, in accordance with some embodiments.
Figure 6 is a schematic illustration of a system according to some embodiments.

### DETAILED DESCRIPTION

The present disclosure will now be described in detail with reference to the accompanying drawings, in which some example embodiments of the disclosed technology are shown. The disclosed technology may, however, be embodied in other forms and should not be construed as limited to the disclosed example embodiments. The disclosed example embodiments are provided to fully convey the scope of the disclosed technology to the skilled person. Those skilled in the art will appreciate that the steps, services and functions explained herein may be implemented using individual hardware circuitry, using software functioning in conjunction with a programmed microprocessor or general purpose computer, using one or more Application Specific Integrated Circuits (ASICs), using one or more Field Programmable Gate Arrays (FPGA) and/or using one or more Digital Signal Processors (DSPs).

It will also be appreciated that when the present disclosure is described in terms of a method, it may also be embodied in apparatus comprising one or more processors, one or more memories coupled to the one or more processors, where computer code is loaded to implement the method. For example, the one or more memories may store one or more computer programs that causes the apparatus to perform the steps, services and functions disclosed herein when executed by the one or more processors in some embodiments.

It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context clearly dictates otherwise. Thus, for example, reference to "a unit" or "the unit" may refer to more than one unit in some contexts, and the like. Furthermore, the words "comprising", "including", "containing" do not exclude other elements or steps. It should be emphasized that the term "comprises/comprising" when used in this specification is taken to specify the presence of stated features, integers, steps, or components. It does not preclude the presence or addition of one or more other features, integers, steps, components, or groups thereof. The term "and/or" is to be interpreted as meaning "both" as well and each as an alternative.

It will also be understood that, although the term first, second, etc. may be used herein to describe various elements or features, these elements should not be limited by these terms. These terms are only used to distinguish one element from another. For example, a first element could be termed a second element, and, similarly, a second element could be termed a first element, without departing from the scope of the embodiments. The first element and the second element are both elements, but they are not the same element.

As used herein, the wording "one or more of" a set of elements (as in "one or more of A, B and C" or "at least one of A, B and C") is to be interpreted as either a conjunctive or disjunctive logic. Put differently, it may refer either to all elements, one element or combination of two or more elements of a set of elements. For example, the wording "one or more of A, B and C" may be interpreted as A or B or C, A and B and C, A and B, B and C, or A and C.

Throughout the present disclosure, reference is made to machine learning models (or just "models"). By the wording "machine learning model" it is herein meant any form of machine learning algorithm, such as deep learning models, neural networks, or the like, which is able to learn and adapt from input data and subsequently make predictions, decisions, or classifications based on new data. In general, the machine learning model, as used herein, may be any neural network based model which operates on sensor data of an autonomous vehicle. In the following, the wording "perception model" and "foundation model" will be used to distinguish between more specific types of machine learning model, or to define the purpose of the machine learning models.

Deployment of a machine learning model typically involves a training phase where the model learns from labeled or unlabeled training data to achieve accurate predictions during the subsequent inference phase. The training data (and input data during inference) may e.g. be an image, or sequence of images, LIDAR data (i.e. a point cloud), radar data etc. Furthermore, the training/input data may comprise a combination or fusion of one or more different data types. The training/input data may for instance comprise both an image depicting a scene of a surrounding environment of the vehicle, and corresponding LIDAR point cloud of the same scene.

The machine learning model may be implemented in some embodiments using publicly available suitable software development machine learning code elements, for example, such as those which are available in Pytorch, TensorFlow, and Keras, or in any other suitable software development platform, in any manner known to be suitable to someone of ordinary skill in the art.

The wording "perception model" herein refers to a computational system or algorithm designed to perceive or interpret an environment depicted in sensor data, such as digital images, video frames, LIDAR data, radar data, ultrasonic data, or other types of visual data relevant for driving of the vehicle. In other words, the perception model may be designed to detect, locate, identify and/or recognize instances of specific objects within the sensor data, vehicle lanes, relevant signage, appropriate navigation paths, etc. Thus, the perception model may be configured to perform a perception task of an automated driving system, ADS, of a vehicle. Examples of perception tasks include, but are not limited to object detection, object classification, lane estimation, and free-space estimation. More specifically, the machine learning model may be an object detection model, an object classification model, a lane estimation model, or a free-space estimation model. The perception model may employ a combination of advanced techniques from computer vision, machine learning, and pattern recognition to analyze the visual sensor data and output e.g. bounding boxes or regions of interest around objects of interest present in the input imagery. The perception model may be further configured to classify what type of object is detected. The perception model may encompass different architectures, including but not limited to convolutional neural networks (CNNs), recurrent neural networks (RNNs), transformers, and other existing or future alternatives.

The output of the perception model may be used in a downstream task or by a downstream system of the ADS, such as in trajectory prediction, path planning, or emergency brake systems. In some embodiments, the perception model may be part of an end-to-end model configured to (as opposed to above) perform both a perception task and a downstream task. For example, the machine learning model may perform trajectory prediction or path planning based on the sensor data directly.

Moreover, in the following, distinction will be made between an "online" perception model, and an "offline" perception model. This distinction should be understood as referring to how or where (i.e. in what setting) the perception model is deployed. The online perception model should be construed as a perception model deployed at the edge, i.e. directly on an edge device, in this case an ADS equipped vehicle. The online perception model may thus be seen as a production model deployed in the vehicle. In other words, the computations of the online perception model are performed locally, close to the data source. In contrast, the offline perception model refers to a perception model deployed e.g. at a remote server (also referred to as cloud server, central server, back-office server, fleet server, or back-end server). Moreover, as opposed to the online perception model, the offline perception model is not used in a production scenario (i.e. in a real-time scenario). Instead, the offline perception model can be run independently, during a development process. Due to their computational environments, the online perception model typically has a simpler or less computational heavy architecture than the offline perception model, since it is run at the edge having limited memory and processing power. The offline perception model on the other hand may be a larger and more complex model, as it may be deployed on a server with more available computational resources. In fact, there may be no clear limit to the size of the offline perception model as it could even be parallelized across several computational devices.

The wording "foundation model" herein refers to a machine learning model that can serve as a base or core architecture upon which more specialized or customized machine learning models are built. The foundation model may also be commonly known as a "base model" or "general-purpose model". The foundational model is typically pre-trained (often by self-supervised or semi-supervised learning) on a vast and diverse dataset at scale to learn general patterns, features, or representations of data. These learned representations can be leveraged and fine-tuned for a wide range of specific tasks, such as natural language processing, image recognition, recommendation systems, and various other applications. Foundation models are typically characterized by their large model size, including a vast number of trainable parameters. The model size and complexity contribute to its ability to capture intricate patterns and representations from extensive datasets. As a non-limiting example, the foundation model may build upon a convolutional neural network (CNN), such as a Residual Neural Network (commonly known in the art as ResNet), as well as one or more transformer models. For example, images captured by of one or more cameras of the vehicle may be fed to the CNN to encode them. Alternatively, a vision transformer may be used. Then a LIDAR point cloud and/or radar scan corresponding to the surrounding environment depicted in the image(s) may be encoded by the CNN or a different model. The encoded image(s), LIDAR point cloud, and/or radar scan may be fed to the transformer model, which can build a unified abstract representation of the surrounding environment. The transformer model may further take into account encoded sensor data, or the sensor data itself, of previous time instances of the sensor data sequence. As a non-limiting example, the so called BEVFormer (presented by Li et al.) may be used. The unified abstract representation may then be further processed by the above mentioned transformer model, or a further transformer model, before providing an output of the foundation model. In summary, arbitrary large models (e.g. CNNs) can be used to encode the sensor data. One or more transformer models or arbitrary size may then be used to interpret the encoded sequence of sensor data. Training such a foundation model can be done end-to-end. In other words, the entire model can be trained simultaneously as a whole. It goes without saying that the above example of a foundation model structure is only to be seen as a non-limiting example, as many alternatives are also possible, as readily appreciated by the person skilled in the art.

In essence, a foundation model can employ a transfer learning approach where knowledge gained from one domain or task can be transferred and adapted to improve performance in another domain or task. The concept of a foundation model plays a crucial role in the efficiency and effectiveness of machine learning systems, enabling faster development and improved performance across a spectrum of applications through the reuse of learned features and representations.

In the present disclosure, the foundation model is an ego trajectory model. By the wording "ego trajectory model" it is herein meant a machine learning model trained to perform the task of predicting a trajectory of an ego vehicle, based on a sensor data sequence captured as the vehicle drives. In other words, the trajectory is predicted of the vehicle having captured the sensor data sequence. In some embodiments, the foundation model may be trained to predict a driven trajectory of the vehicle. Put differently, based on the sensor data sequence captured as the vehicles drives, the ego trajectory model can retrospectively predict the driven trajectory of the vehicle. In some embodiments, the foundation model may be trained to predict a future trajectory of the vehicle. Put differently, based on the sensor data sequence captured as the vehicle drives, the ego trajectory model can predict the trajectory that the vehicle is expected to drive along, in a subsequent time sequence. For example, the sensor data sequence may comprise sensor data of the vehicle over a first time period, T1. The foundation model may then predict a trajectory of the vehicle over a second time period T2, after the first time period T1. Time period may also be referred to a (time) sequence, or a number of subsequent time instances. By learning any one (or both) of the tasks of predicting the driven trajectory, or predicting the future trajectory, the foundation model can obtain an understanding of dynamics of the physical world, e.g. how different objects behave and how this is reflected in the sensor data. The task of predicting the future trajectory of the vehicle is a particularly challenging task, which when solved on a sufficiently large set of data can provide a machine learning model that has learnt a complex understanding of the behavior and features of all objects on the road, as well as the road itself, and the surrounding environment. Predicting future trajectories may thus be advantageous in that it can achieve high performance in the subsequent annotation of sensor data. To be able to predict future trajectories (and to some extent also driven trajectories) in a huge variety of circumstances, the model must implicitly solve most of the perception tasks present in autonomous vehicles. For example, for the trajectories to always stay on the road the model needs to know where the road is, for the trajectories to not swirl between lanes the model must detect lanes, for the trajectories to avoid all obstructions the models must learn to detect objects, etc. More details regarding the online and offline perception model, the foundation model, and the training thereof will become apparent from the following detailed description.

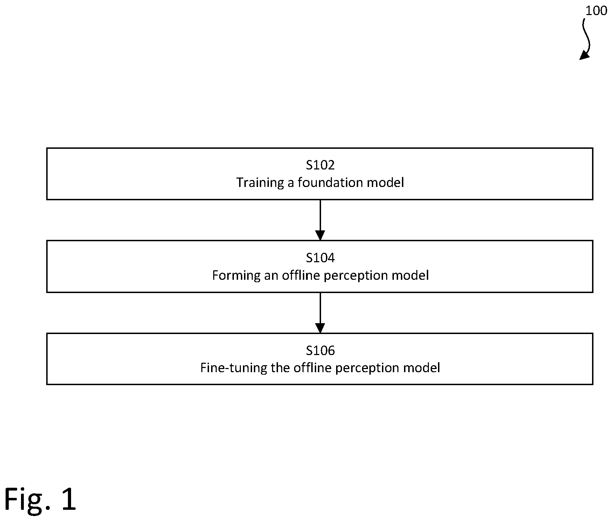

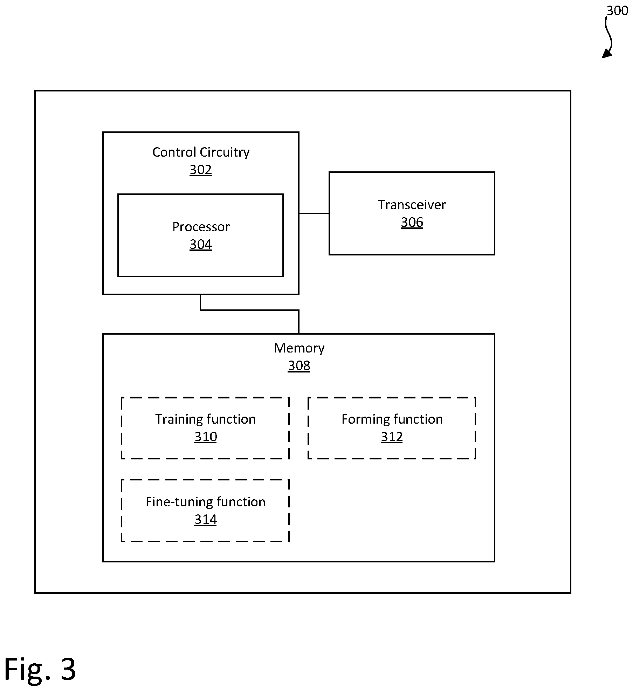

Figure 1 is a schematic flowchart representation of a computer-implemented method 100 for providing an offline perception model for subsequent annotation of training data. The offline perception model may also be referred to as an annotation model. The training data may in turn be used in subsequent training of an online perception model. The method 100 may be performed by a device 300 as described below in connection with Fig. 3. More generally, the method 100 may be performed by any suitable computing device, such as in an offline server setting. Advantageously, the server is a device having more available computational resources than an ADS equipped vehicle. This may facilitate deployment of a more computational heavy offline perception model. The online perception model trained on the annotated training data can instead be deployed in the vehicle.

The wording "annotation" as used herein, refers to the process of adding some form of metadata or tags to data to make it understandable and usable for machine learning algorithms. The metadata can be used to enrich the sensor data in this case, to make it useful for training and evaluating machine learning models. This can include associating labels for identifying e.g. an object in the image, or determining bounding boxes or assigning segmentation data. The wording "labelling" or "labels" can thus be seen as a subset of data annotation. More specifically, it refers to the process of assigning one or more labels or categories to data instances (such as sensor data). For example, in image classification, labeling involves tagging images with their respective classes (e.g., cat, dog, or car).

Below, the different steps of the method 100 are described in more detail. Even though illustrated in a specific order, the steps of the method 100 may be performed in any suitable order as well as multiple times. Thus, although Fig. 1 may show a specific order of method steps, the order of the steps may differ from what is depicted. In addition, two or more steps may be performed concurrently or with partial concurrence. Such variation will depend on the software and hardware systems chosen and on designer choice. All such variations are within the scope of the invention. Likewise, software implementations could be accomplished with standard programming techniques with rule-based logic and other logic to accomplish the various steps. Further variants of the method 100 will become apparent from the present disclosure. The herein mentioned and described embodiments are only given as examples and should not be limiting to the present invention. Other solutions, uses, objectives, and functions within the scope of the invention as claimed below described patent claims should be apparent for the person skilled in the art.

The method 100 comprises training S102 a foundation model, using a first training dataset, to predict a trajectory of a vehicle based on a sensor data sequence. The predicted trajectory may be a driven trajectory of the vehicle. The predicted trajectory may be a future trajectory of the vehicle. The predicted trajectory may be both a driven trajectory and a future trajectory of the vehicle. The sensor data sequence comprises sensor data pertaining to a surrounding environment of the vehicle. In other words, the foundation model may be trained to predict the trajectory of the ego vehicle. Thus, the predicted trajectory may be referred to as an ego trajectory. Moreover, the sensor data sequence may be captured by onboard sensors of the ego vehicle, of which the trajectory is to be predicted. More specifically, the sensor data sequence may comprise sensor data pertaining to the surrounding environment of the vehicle for a number of sequent time instances. Thus, the sensor data sequence may comprise sensor data collected by on-board sensors of the vehicle at a number of subsequent time instances, t, ... , t+n, where n is any positive integer > 0. The sensor data sequence may also be referred to as a stream of sensor data, or spatiotemporal sensor data. By spatiotemporal sensor data, it is herein meant sensor data captured by onboard sensors of a vehicle over space and time. As explained in the foregoing, the foundation model may be trained to determine the driven trajectory of the vehicle. Thus, the foundation model may predict the driven trajectory of the vehicle over the time instances t to t+n for which the sensor data was collected. Alternatively, or in combination, the foundation model may be trained to predict the future trajectory of the vehicle. Thus, the foundation model may predict the future trajectory of the vehicle over the time instances t+n+1 to t+m, where m is a positive integer > n+1. In some embodiments, the foundation model may predict the trajectory of the vehicle both over time instances which at least partially overlaps with the sensor data sequence, and over time instances which do not overlap with the sensor data sequence (i.e. at least one future time instance).

The wording "predict", as in "predict a trajectory" should herein be construed as determining the driven or future trajectory of the vehicle. In one example, the sensor data sequence may comprise an image for each time instance of the sequence of time instances, where each image depicts at least part of the surrounding environment from a point-of-view of the vehicle, along its trajectory, at the corresponding time instance. The trajectory of the vehicle may thus be predicted, or determined, based on how the depicted surrounding environment changes over the sequence.

The first training dataset comprises sensor data sequences and information indicative of a driven trajectory associated with a respective sensor data sequence. In other words, the first training dataset may comprise a number of training samples. Each training sample comprises a sensor data sequence, and associated information indicative of a driven trajectory of the vehicle. The information indicative of the driven trajectory may comprise data pertaining to a position of the vehicle for a number of subsequent time instances. The data pertaining to the position of the vehicle may e.g. be GPS data of the vehicle over the subsequent time instances. Alternatively, or in combination, the data pertaining to the position of the vehicle may be determined based on odometry data of the vehicle, or any other type of motion data of the vehicle. Alternatively, or in combination, the data pertaining to the position of the vehicle may be obtained by an inertial navigation system of the vehicle. The information indicative of the driven trajectory may thus comprise data pertaining to a motion of the vehicle over the number of subsequent time instances. As an example, the information indicative of the driven trajectory may comprise a geographical position (or other type of motion data) of the vehicle at each time instance t to t+n for which the sensor data sequence is given. In some embodiments, the information indicative of the driven trajectory may further comprise a geographical position (or other type of motion data) of the vehicle at a number of time instances subsequent to the sensor data sequence, i.e. t+n+1 to t+m. In other words, the driven trajectory of may be over the sensor data sequence, as well as into the future. In some embodiments, the information indicative of the driven trajectory may comprise only geographical positions (or other type of motion data) of the vehicle at a number of time instances subsequent to the sensor data sequence, i.e. t+n+1 to t+m. This will be further explained below. The wording "associated" as in the information indicative of a driven trajectory being "associated with a respective sensor data sequence" may thus be construed as being indicative of a driven trajectory over the same period of time as the sensor data sequence, over a period of time subsequent to the sensor data sequence, or over a time period at least partially overlapping the sensor data sequence and a number of subsequent time instances.

It is to be appreciated that the information indicative of the driven trajectory of the vehicle can be formatted in any suitable way depending on how the foundation model and its output is constructed. More specifically, the foundation model may be trained to predict, or determine, the trajectory of the vehicle based on the sensor data sequence inputted to the model, on a same or similar format as the information indicative of the driven trajectory available in the first training dataset. The information indicative of the driven trajectory may thus serve as a ground truth. If the foundation model is trained to predict the future trajectory of the vehicle, a part of the information indicative of the driven trajectory may serve as input to the model, alongside the sensor data sequence.

The first training dataset can be readily collected (or recorded), over a sequence of time instances, by collecting both sensor data pertaining to the surrounding environment of a vehicle as well as sensor data which can serve as information indicative of a driven trajectory of the vehicle (or from which this information can be derived). Thereby, a vast amount of data can be collected in a simple way.

An illustrative example of how the training samples of the first training dataset can be collected, with now be given. This example also illustrates a structure of the input to the foundation model, and what it can be trained to do. Sensor data pertaining to the surrounding environment and a driven trajectory of a vehicle may be recorded over a time period T. The time period T may be divided into a first time period T1 and a second time period T2. The second time period T2 being later in time than the first time period T2. The sensor data sequence, referred to above as being used as input to the foundation model, may then be formed by the sensor data corresponding to the first time period. In other words, the sensor data corresponding to the second time period may be withheld from the foundation model. Optionally the recorded driven trajectory over the first sub-period T1 may also be fed as input to the foundation model. The foundation model may then be tasked with predicting the driven trajectory of the vehicle over the second time period T2. The second time period T2 then corresponds to the "future" as referred to above. The recorded driven trajectory of the vehicle for the second sub-period can thus be used as ground truth for the foundation model. In case the foundation model is to predict the driven trajectory, also the recorded driven trajectory of the first time period T1 can be used as ground truth. The information indicative of the driven trajectory associated with the sensor data sequence may thus refer to the recorded driven trajectory for the first time period T1, the second time period T2, or both the first and second time period.

When training the foundation model, the information indicative of the driven trajectory can thus be used as ground truth and/or as input to the foundation model. In the former case, the foundation model can be fed with the sensor data sequence, and output a predicted driven trajectory of the vehicle. A comparison of the output of the model with the ground truth may then serve as basis for learning and improving the foundation model in predicting the trajectory of the vehicle. In the latter case, the driven trajectory can provide the foundation model with further information about the past behavior of the vehicle, which it can use to make a better prediction.

The first training dataset, as described herein, may be construed as an implicitly annotated data set. By the wording "implicitly annotated", it is herein meant a low-level annotation which can be obtained without any human or automated annotation processes. Put differently, the sensor data sequence can be implicitly annotated in the sense that it is annotated without having to manually annotate the sensor data sequence, process the sensor data sequence by a machine learning model, or in any other way analyze the contents of the sensor data sequence. Instead, the sensor data sequence is associated with the information indicative of the driven trajectory which may be collected at the same time as the sensor data sequence. In some regards, the first training dataset can be seen as an unannotated training dataset, as no formal labels are associated with the training samples. The supervision signal instead comes from the data itself, rather than from an external source, such as human or other automated annotation processes. This allows the first training dataset to be much larger than would be feasible for an explicitly annotated training dataset (such as the second training dataset described below).

By using a first training dataset as described above, the collection of vast amounts of training data can be done with little to no effort. Using implicitly annotated data means that there is virtually no limit as to how much training data can be collected for the training of the foundation model, since, if having a fleet of vehicles, it is only limited by storage and transfer of data between vehicles and a central server.

The training S102 of the foundation model can be performed by so-called imitation learning. This may be since the foundation model is trained to predict (or learn from) the behavior of the driver. Imitation learning herein refers to a machine learning paradigm where the model learns from observing and mimicking actions of a human or other demonstrator. In essence, imitation learning can be described as a process of allowing an agent (herein the foundation model) to learn from the behavior of a human or another agent to replicate the behavior in similar scenario. The demonstrator in this case may thus be a driver of the vehicle, or an automated driving system of the vehicle. The demonstration can be recorded by collecting the information of the driven trajectory. The sensor data sequence pertaining to the surrounding environment thus corresponds to the scenario in which the agent (i.e. foundation model) is to act in. The foundation model is then trained on the sensor data sequence and the information indicative of the driven trajectory to predict the actions of the demonstrator.

In another way of seeing it, the training S102 of the foundation model can be seen as a form of supervised learning, in which implicitly annotated training samples is used, or as (future prediction) self-supervised learning (since not all parts of the data is shown to the model, but instead the model is tasked with predicting this data). This form of supervised learning should then be distinguished from traditional supervised learning using explicitly annotated training samples. In traditional supervised learning, models are trained on labeled datasets, where each input is paired with a corresponding target label. In traditional unsupervised learning, the model is trained exclusively on unlabeled datasets. However, in the training of the foundation model, the implicit annotation of the input data is generated without any human supervision. In this case, the generated supervision signal corresponds to the recorded trajectory (i.e. one form of sensor data collected by the vehicle), which can be used as implicit label for the sensor data sequence (i.e. another form of sensor data collected by the same vehicle). Using this form of training the foundation model may be advantageous in its ability to leverage vast amounts of unlabeled (e.g. implicitly labeled) data, which is often more readily available than labeled (e.g. explicitly labeled) data, while still enjoying at least some benefits of having a supervision signal associated with the data.

The surrounding environment of the vehicle can be understood as a general area (of the physical world) around the vehicle in which objects (such as other road users, landmarks, obstacles, etc.) can be detected and identified by vehicle sensors (radar sensor, LIDAR sensor, camera(s), etc.), i.e. within a sensor range of the vehicle. The sensor data pertains to the surrounding environment in the sense that the sensor data reflects one or more properties of the surrounding environment, e.g. by depicting one or more objects in the surrounding environment.

The sensor data (of the sensor data sequence) may be collected by on-board sensors of an ADS equipped vehicle. Thus, the sensor data may pertain to a surrounding environment of the vehicle. The sensor data may comprise one or more of image data, LIDAR data, radar data or ultrasonic data. The image data may e.g. be one or more images or image frame(s). Moreover, the one or more images may depict different parts of the surrounding environment. The LIDAR data may be a point cloud of the surrounding environment. By using only one type of sensor data, the foundation model may be trained to better understand the world from that point of view. By using more than one type of sensor data, the foundation model may learn also how different sensor data types relates to each other.

The sensor data may be raw sensor data. Alternatively, the sensor data may be processed or fused sensor data of two or more different types of sensor data.

The method 100 further comprises forming S104 the offline perception model by adding a task-specific layer to the trained foundation model. The task-specific layer is configured to perform a perception task of the offline perception model. The task-specific layer may comprise one or more sub-layers needed for performing the perception task. The perception task may be one of object detection, object classification, object tracking, lane estimation, free-space estimation, trajectory prediction, obstacle avoidance, scene classification and traffic sign classification.

The step of forming S104 the offline perception model may be seen as transforming the trained foundation model into a task-specific model. In addition to adding the task-specific layer, the structure of the foundation model may be additionally modified to accommodate this. For example, an output layer of the foundation model may be removed, and replaced by the task-specific layer. Moreover, an input layer of the foundation model may be modified or replaced. This may for example be the case if the foundation model and the offline perception model will take different types of data as input. As one example, the foundation model may take as input both the sensor data sequence and the driven trajectory (when it is tasked with predicting the future trajectory), whereas the perception model may take only sensor data as input. After having added the task specific layer(s) appropriate for making predictions according to the intended perception task, the foundation model may be frozen before subsequently fine-tuning the model, as described below. Ways of converting a trained foundation model into a task-specific model (also known as transfer learning) are to be considered well-known in the art. Any suitable way may be used in this case.

The method 100 further comprises fine-tuning S106 the offline perception model, using a second training dataset, to perform the perception task. The second training dataset comprises training data annotated for said perception task. Fine-tuning the offline perception model allows the already trained, and then modified, foundation model to be adapted to the perception task. Fine-tuning may involve training a part of the offline perception model, such as the task specific layer. Before doing so, the foundation model being part of the offline perception model may be frozen, so that its trainable parameters does not change during the fine-tuning process. Thereby, the fine-tuning of the offline perception model allows trainable parameters (e.g. model weights) of the task specific layer to be learned.. Alternatively, the entire offline perception model may be trained during the fine-tuning. In other words, one or more trainable parameters of the foundation model may be updated during fine tuning of the offline perception model.

In contrast to the first training dataset which may be an implicitly annotated dataset, the second training dataset may be an explicitly annotated dataset. In other words, the second training dataset can comprise training samples with explicit labels determined e.g. through human or auto annotation procedures. Due to the offline perception model comprising the already trained foundation model, the second training dataset can be several orders of magnitude smaller than the first training dataset while still being able to achieve higher accuracy and performance compared to a perception model trained only on the second dataset. In other words, the second training dataset may be several orders of magnitude smaller than the first training dataset. Fine-tuning S106 of the offline perception model may be performed by supervised learning. More specifically, fine-tuning S106 of the offline perception model may be performed by supervised learning using explicitly annotated data.

Executable instructions for performing these functions are, optionally, included in a non-transitory computer-readable storage medium or other computer program product configured for execution by one or more processors.

Generally speaking, a computer-accessible medium may include any tangible or non-transitory storage media or memory media such as electronic, magnetic, or optical media-e.g., disk or CD/DVD-ROM coupled to computer system via bus. The terms "tangible" and "non-transitory," as used herein, are intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer-readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link.

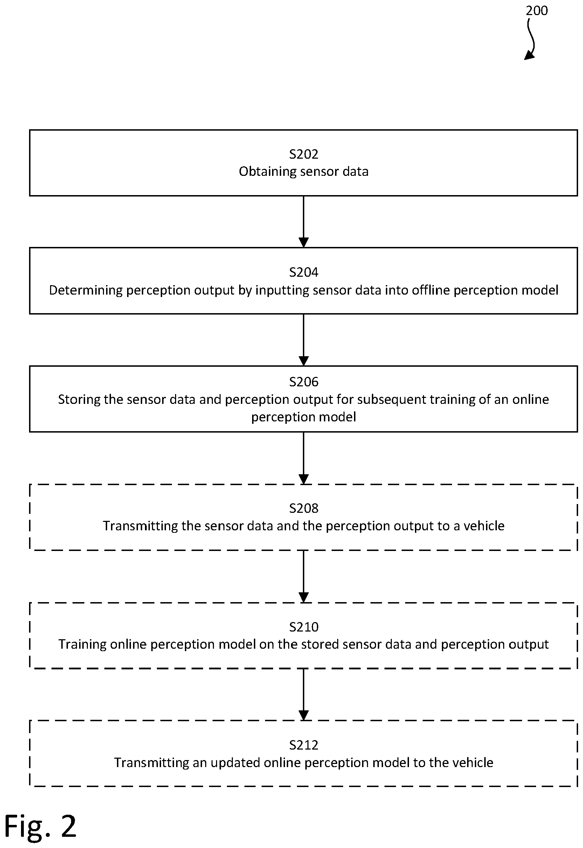

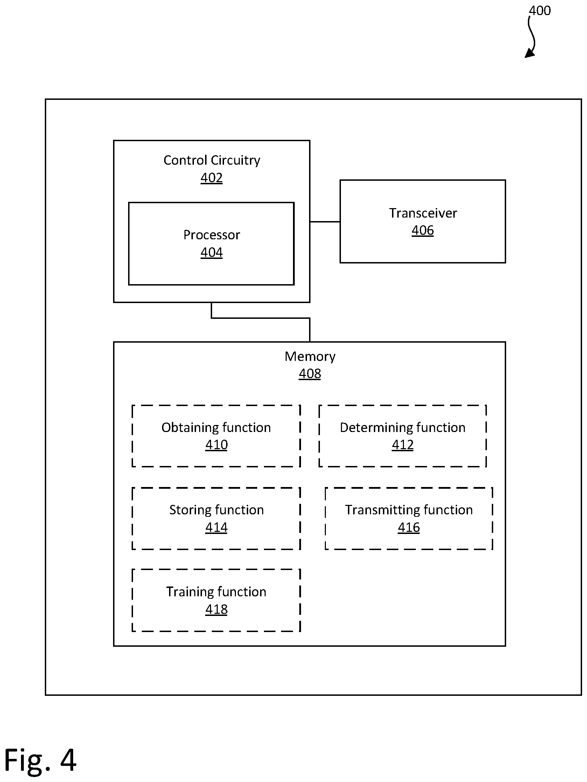

Figure 2 is a schematic flowchart representation of a computer-implemented method 200 for annotating data for use in subsequent training of an online perception model, according to some embodiments. The online perception model is configured to perform a perception task of a vehicle equipped with an automated driving system. The method 200 can be performed by a device 400 as described below in connection with Fig. 4.

Below, the different steps of the method 200 are described in more detail. Even though illustrated in a specific order, the steps of the method 200 may be performed in any suitable order as well as multiple times. Thus, although Fig. 2 may show a specific order of method steps, the order of the steps may differ from what is depicted. In addition, two or more steps may be performed concurrently or with partial concurrence. For example, the steps denoted S208 and S210 may be performed independently of each other. Such variation will depend on the software and hardware systems chosen and on designer choice. All such variations are within the scope of the invention. Likewise, software implementations could be accomplished with standard programming techniques with rule-based logic and other logic to accomplish the various steps. Further variants of the method 200 will become apparent from the present disclosure. The herein mentioned and described embodiments are only given as examples and should not be limiting to the present invention. Other solutions, uses, objectives, and functions within the scope of the invention as claimed below described patent claims should be apparent for the person skilled in the art.

The method 200 comprises obtaining S202 sensor data pertaining to a physical environment. The senor data may be collected by one or more onboard sensors of a vehicle. The sensor data may thus pertain to a surrounding physical environment of the vehicle having collected the sensor data. The vehicle may be a vehicle provided with the online perception model. Alternatively, the vehicle may be a different vehicle configured for sensor data collection.

The wording "obtaining" is throughout the present disclosure to be interpreted broadly and encompasses receiving, retrieving, collecting, acquiring, and so forth directly and/or indirectly between two entities configured to be in communication with each other or further with other external entities. However, in some embodiments, the term "obtaining" is to be construed as determining, deriving, forming, computing, etc. Thus, as used herein, "obtaining" may indicate that a parameter is received at a first entity/unit from a second entity/unit, or that the parameter is determined at the first entity/unit e.g. based on data received from another entity/unit. In some embodiments, the sensor data is obtained by being received from the vehicle having collected the sensor data. The vehicle may be part of a fleet of vehicles configured to collect sensor data for use as training data. It is to be noted that the vehicle having collected the sensor data need not to be the same vehicle as being provided with the online perception model. In some embodiments, the sensor data is obtained by being retrieved from a database. In other words, the database may comprise sensor data already collected by one or more vehicles, or by any other collecting means.

The method 200 further comprises determining S204 a perception output by inputting the obtained sensor data into an offline perception model provided by any embodiment of the method 100 described above in connection with Fig. 1. In other words, the perception output may be determined by feeding the sensor data to the trained offline perception model. The offline perception model may be trained to perform the same perception task as the online perception model. Thus, the perception output may be a same type of output as the online perception model would output. More specifically, the perception output may e.g. comprise bounding boxes of objects detected in the sensor data, labels of identified objects, and/or a segmentation of the sensor data etc. The perception output of the offline perception model may thus be used as annotation data for the sensor data inputted to the offline perception model. The perception output may be used as annotation data directly. However, in some embodiments, the perception output may be further processed before being used as annotation data.

The offline perception model as provided according to what is described above can, thanks to its high performance, be able to perceive objects also in new or previously unseen scenarios or environments, thus making it possible to provide annotation data to a wide variety of scenes. This means that the offline perception model becomes more capable for annotating data, than previous attempts of achieving auto annotation models, which are merely trained on a limited training dataset of explicitly annotated data. As a non-limiting example, the offline perception model may, despite being fine-tuned on the second training dataset only comprising examples of tractors in a country-side environment, be able to recognize tractors in a city-environment depicted in the obtained sensor data, at least partly due to the trained foundation model being part of the model architecture of the offline perception model. Another kind of auto-annotation model trained only on a training dataset like the second training dataset describe above, may not be able to recognize a tractor in such a new scenario. It is to be appreciated that this simplified example merely serves for the purpose of illustrating the principles of the presently disclosed technology, and may not be representative of an actual case.

The method 200 further comprises storing S206 the sensor data together with the perception output as annotation data for subsequent training of the online perception model of the vehicle. The above mentioned steps may be repeated for additional sensor data to obtain a training dataset of annotated sensor data. This training dataset may then be used in training the online perception model using supervised learning.

The method 200 may further comprise transmitting S208 the perception data together with the perception output to the vehicle for subsequent training of the online perception model in the vehicle. Thus, a local model of the online perception model may be trained at the edge, i.e. by the vehicle.

The method 200 may further comprise training S210 the online perception model on the stored sensor data together with the perception output, thereby generating an updated online perception model. Thus, a global (or master) model of the online perception model may be trained e.g. by a centralized server. It is to be appreciated that the online perception model may be trained (or re-trained) using the stored annotated data in any suitable way available to the skilled person in the art today.

The method 200 may further comprise transmitting S212 the updated online perception model to a vehicle, or fleet of vehicles. It is to be appreciated that the updated online perception model may be transmitted as an entire model, or as information indicative of how to update a perception model already provided in the vehicle. For example, only the values for any updated parameters of the online perception model may be transmitted, thereby reducing the amount of data being transmitted.

Executable instructions for performing these functions are, optionally, included in a non-transitory computer-readable storage medium or other computer program product configured for execution by one or more processors.

Figure 3 is a schematic illustration of a device 300 for providing an offline perception model for subsequent annotation of training data for use in training of an online perception model, in accordance with some embodiments. The device 300 may be configured to perform the method 100 as described in connection with Fig. 1.

The device 300 as described herein for the purpose of this patent application, refers to a computer system, or a networked device configured to provide various computing services, data storage, processing capabilities, or resources to clients or users over a communication network. In the present case, the wording "clients" refers to connected vehicles (such as the vehicle 400 described below) of a fleet of vehicles. Thus, the device 300 as described herein may refer to a general computing device. The device 300 may be a server such as a remote server, cloud server, central server, back-office server, fleet server, or back-end server. Even though the device 300 is herein illustrated as one device, the device 300 may be a distributed computing system, formed by a number of different devices.

The device 300 comprises control circuitry 302. The control circuitry 302 may physically comprise one single circuitry device. Alternatively, the control circuitry 302 may be distributed over several circuitry devices.

As shown in the example of Fig. 3, the device 300 may further comprise a transceiver 306 and a memory 308. The control circuitry 302 being communicatively connected to the transceiver 306 and the memory 308. The control circuitry 302 may comprise a data bus, and the control circuitry 302 may communicate with the transceiver 306 and/or the memory 308 via the data bus.

The control circuitry 302 may be configured to carry out overall control of functions and operations of the device 300. The control circuitry 302 may include a processor 304, such as a central processing unit (CPU), microcontroller, or microprocessor. The processor 304 may be configured to execute program code stored in the memory 308, in order to carry out functions and operations of the device 300. The control circuitry 302 is configured to perform the steps of the method 100 as described above in connection with Fig. 1. The steps may be implemented in one or more functions stored in the memory 308.

The transceiver 306 is configured to enable the device 300 to communicate with other entities, such as vehicles or other devices. The transceiver 306 may both transmit data from and receive data to the device 300.

The memory 308 may be a non-transitory computer-readable storage medium. The memory 308 may be one or more of a buffer, a flash memory, a hard drive, a removable media, a volatile memory, a non-volatile memory, a random access memory (RAM), or another suitable device. In a typical arrangement, the memory 308 may include a non-volatile memory for long-term data storage and a volatile memory that functions as system memory for the device 300. The memory 308 may exchange data with the circuitry 302 over the data bus. Accompanying control lines and an address bus between the memory 308 and the circuitry 302 also may be present.

Functions and operations of the device 300 may be implemented in the form of executable logic routines (e.g., lines of code, software programs, etc.) that are stored on a non-transitory computer readable recording medium (e.g., the memory 308) of the device 300 and are executed by the circuitry 302 (e.g., using the processor 304). Put differently, when it is stated that the circuitry 302 is configured to execute a specific function, the processor 304 of the circuitry 302 may be configured execute program code portions stored on the memory 308, wherein the stored program code portions correspond to the specific function. Furthermore, the functions and operations of the circuitry 302 may be a stand-alone software application or form a part of a software application that carries out additional tasks related to the circuitry 302. The described functions and operations may be considered a method that the corresponding device is configured to carry out, such as the method 100 discussed above in connection with

Fig. 1. In addition, while the described functions and operations may be implemented in software, such functionality may as well be carried out via dedicated hardware or firmware, or some combination of one or more of hardware, firmware, and software. In the following, the function and operations of the device 300 is described.

The control circuitry 302 is configured to train a foundation model, using a first training dataset, to predict a trajectory of a vehicle based on a sensor data sequence. The sensor data sequence comprises sensor data pertaining to a surrounding environment of the vehicle. The first training dataset comprises sensor data sequences and information indicative of a driven trajectory associated with a respective sensor data sequence. Training the foundation model may be performed e.g. by execution of a training function 310.

The control circuitry 302 is further configured to form the offline perception model by adding a task-specific layer to the trained foundation model. The task-specific layer is configured to perform a perception task of the offline perception model. This may be performed e.g. by execution of a forming function 312.

The control circuitry 302 is further configured to fine-tune the offline perception model, using a second training dataset, to perform the perception task. The second training dataset comprises training data annotated for said perception task. This may be performed e.g. by execution of a fine-tuning function 314.

It should be noted that the principles, features, aspects, and advantages of the method 100 as described above in connection with Fig. 1, are applicable also to the device 300 as described herein. In order to avoid undue repetition, reference is made to the above.

Figure 4 is a schematic illustration of a device 400 for annotating data for use in subsequent training of an online perception model. The online perception model is configured to perform a perception task of a vehicle equipped with an automated driving system. The device 400 may be configured to perform the method 200 as described in connection with Fig. 2. The device 400 described in connection with Fig. 4 and the device 300 described above in connection with Fig. 3 may be incorporated in a single device, such as a common server.

The device 400 as described herein for the purpose of this patent application, refers to a computer system, or a networked device configured to provide various computing services, data storage, processing capabilities, or resources to clients or users over a communication network. In the present case, the wording "clients" refers to connected vehicles (such as the vehicle 400 described below) of a fleet of vehicles. Thus, the device 400 as described herein may refer to a general computing device. The device 400 may be a server such as a remote server, cloud server, central server, back-office server, fleet server, or back-end server. Even though the device 400 is herein illustrated as one device, the device 400 may be a distributed computing system, formed by a number of different devices.

The device 400 comprises control circuitry 402. The control circuitry 402 may physically comprise one single circuitry device. Alternatively, the control circuitry 402 may be distributed over several circuitry devices.

As shown in the example of Fig. 4, the device 400 may further comprise a transceiver 406 and a memory 408. The control circuitry 402 being communicatively connected to the transceiver 406 and the memory 408. The control circuitry 402 may comprise a data bus, and the control circuitry 402 may communicate with the transceiver 406 and/or the memory 408 via the data bus.

The control circuitry 402 may be configured to carry out overall control of functions and operations of the device 400. The control circuitry 402 may include a processor 404, such as a central processing unit (CPU), microcontroller, or microprocessor. The processor 404 may be configured to execute program code stored in the memory 408, in order to carry out functions and operations of the device 400. The control circuitry 402 is configured to perform the steps of the method 200 as described above in connection with Fig. 2. The steps may be implemented in one or more functions stored in the memory 408.

The transceiver 406 is configured to enable the device 400 to communicate with other entities, such as vehicles or other devices. The transceiver 406 may both transmit data from and receive data to the device 400.

The memory 408 may be a non-transitory computer-readable storage medium. The memory 408 may be one or more of a buffer, a flash memory, a hard drive, a removable media, a volatile memory, a non-volatile memory, a random access memory (RAM), or another suitable device. In a typical arrangement, the memory 408 may include a non-volatile memory for long-term data storage and a volatile memory that functions as system memory for the device 400. The memory 408 may exchange data with the circuitry 402 over the data bus. Accompanying control lines and an address bus between the memory 408 and the circuitry 402 also may be present.

Functions and operations of the device 400 may be implemented in the form of executable logic routines (e.g., lines of code, software programs, etc.) that are stored on a non-transitory computer readable recording medium (e.g., the memory 408) of the device 400 and are executed by the circuitry 402 (e.g., using the processor 404). Put differently, when it is stated that the circuitry 402 is configured to execute a specific function, the processor 404 of the circuitry 402 may be configured execute program code portions stored on the memory 408, wherein the stored program code portions correspond to the specific function. Furthermore, the functions and operations of the circuitry 402 may be a stand-alone software application or form a part of a software application that carries out additional tasks related to the circuitry 402. The described functions and operations may be considered a method that the corresponding device is configured to carry out, such as the method 200 discussed above in connection with Fig. 2. In addition, while the described functions and operations may be implemented in software, such functionality may as well be carried out via dedicated hardware or firmware, or some combination of one or more of hardware, firmware, and software. In the following, the function and operations of the device 400 is described.

The control circuitry 402 is configured to obtain sensor data pertaining to a physical environment. The sensor data may pertain to a surrounding physical environment of a vehicle having collected the sensor data. This may be performed e.g. by execution of an obtaining function 410.

The control circuitry 402 is further configured to determine a perception output by inputting the obtained sensor data into an offline perception model provided by the method 100 as described above in connection with Fig. 1. This may be performed e.g. by execution of a determining function 412.

The control circuitry 402 is further configured to store the sensor data together with the perception output as annotation data for subsequent training of the online perception model of the vehicle. This may be performed e.g. by execution of a storing function 414.

The control circuitry 402 may be further configured to transmit the perception data together with the perception output to the vehicle for subsequent training of the online perception model in the vehicle. This may be performed e.g. by execution of a transmitting function 416.

The control circuitry 402 may be further configured to train the online perception model on the stored sensor data together with the perception output, thereby generating an updated online perception model. This may be performed e.g. by execution of a training function 418.

It should be noted that the principles, features, aspects, and advantages of the method 200 as described above in connection with Fig. 2, are applicable also to the device 400 as described herein. In order to avoid undue repetition, reference is made to the above.

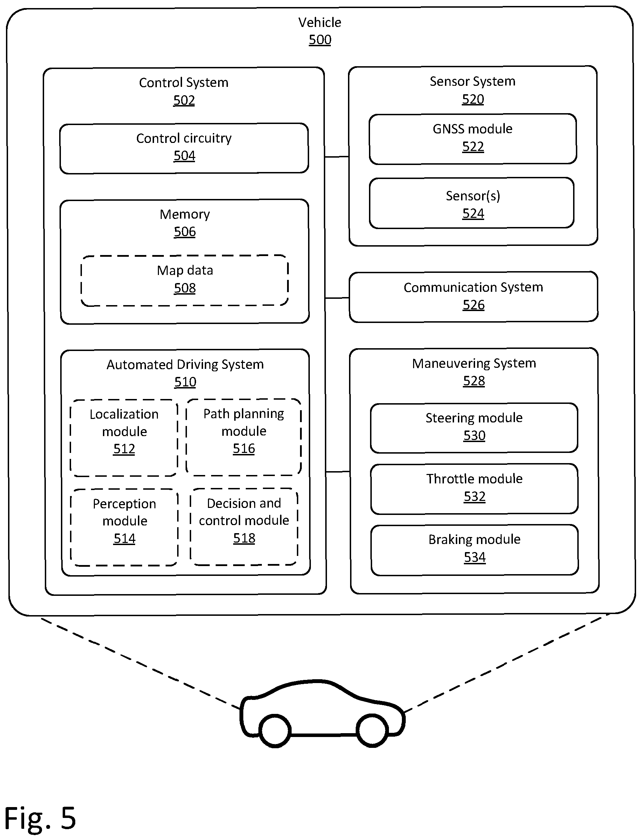

Figure 5 is a schematic illustration of a vehicle 500 in accordance with some embodiments. The vehicle 500 is equipped with an Automated Driving System (ADS) 510. As used herein, a "vehicle" is any form of motorized transport. For example, the vehicle 500 may be any road vehicle such as a car (as illustrated herein), a motorcycle, a (cargo) truck, a bus, a smart bicycle, etc.

The vehicle 500 comprises a number of elements which can be commonly found in autonomous or semi-autonomous vehicles. It will be understood that the vehicle 500 can have any combination of the various elements shown in Fig. 5. Moreover, the vehicle 500 may comprise further elements than those shown in Fig. 5. While the various elements is herein shown as located inside the vehicle 500, one or more of the elements can be located externally to the vehicle 500. Further, even though the various elements are herein depicted in a certain arrangement, the various elements may also be implemented in different arrangements, as readily understood by the skilled person. It should be further noted that the various elements may be communicatively connected to each other in any suitable way. The vehicle 500 of Fig. 5 should be seen merely as an illustrative example, as the elements of the vehicle 500 can be realized in several different ways.

The vehicle 500 comprises a control system 502. The control system 502 is configured to carry out overall control of functions and operations of the vehicle 500. The control system 502 comprises control circuitry 504 and a memory 506. The control circuitry 502 may physically comprise one single circuitry device. Alternatively, the control circuitry 502 may be distributed over several circuitry devices. As an example, the control system 502 may share its control circuitry 504 with other parts of the vehicle. The control circuitry 502 may comprise one or more processors, such as a central processing unit (CPU), microcontroller, or microprocessor. The one or more processors may be configured to execute program code stored in the memory 506, in order to carry out functions and operations of the vehicle 500. The processor(s) may be or include any number of hardware components for conducting data or signal processing or for executing computer code stored in the memory 506. In some embodiments, the control circuitry 504, or some functions thereof, may be implemented on one or more so-called system-on-a-chips (SoC). As an example, the ADS 510 may be implemented on a SoC. The memory 506 optionally includes high-speed random access memory, such as DRAM, SRAM, DDR RAM, or other random access solid-state memory devices; and optionally includes non-volatile memory, such as one or more magnetic disk storage devices, optical disk storage devices, flash memory devices, or other non-volatile solid-state storage devices. The memory 506 may include database components, object code components, script components, or any other type of information structure for supporting the various activities of the present description.

In the illustrated example, the memory 506 further stores map data 508. The map data 508 may for instance be used by the ADS 510 of the vehicle 500 in order to perform autonomous functions of the vehicle 500. The map data 508 may comprise high-definition (HD) map data. It is contemplated that the memory 508, even though illustrated as a separate element from the ADS 510, may be provided as an integral element of the ADS 510. In other words, according to some embodiments, any distributed or local memory device may be utilized in the realization of the present inventive concept. Similarly, the control circuitry 504 may be distributed e.g. such that one or more processors of the control circuitry 504 is provided as integral elements of the ADS 510 or any other system of the vehicle 500. In other words, according to an exemplary embodiment, any distributed or local control circuitry device may be utilized in the realization of the present inventive concept.

The vehicle 500 further comprises a sensor system 520. The sensor system 520 is configured to acquire sensory data about the vehicle itself, or of its surroundings. The sensor system 520 may for example comprise a Global Navigation Satellite System (GNSS) module 522 (such as a GPS) configured to collect geographical position data of the vehicle 500. The sensor system 520 may further comprise one or more sensors 524. The one or more sensor(s) 524 may be any type of on-board sensors, such as cameras, LIDARs and RADARs, ultrasonic sensors, gyroscopes, accelerometers, odometers etc. The one or more sensor(s) 524 may thus be used for collecting sensor data sequences pertaining to the surrounding environment of the vehicle 500 to be used as training data for the foundation model. Additionally, the sensor system 520 may collect geographical position data (e.g. by the GNSS module 522) for acquiring data about the driven trajectory. In other words, the GNSS module 522 may collect (or record) information indicative of a driven trajectory of the vehicle. Moreover, the one or more sensor(s) 524 can be used collect sensor data pertaining to the surrounding environment of the vehicle 500 to be used in fine-tuning of the offline perception model, and/or training of the online perception model, once it has been annotated. It should be appreciated that the sensor system 520 may also provide the possibility to acquire sensory data directly or via dedicated sensor control circuitry in the vehicle 500.

The vehicle 500 further comprises a communication system 526. The communication system 526 is configured to communicate with external units, such as other vehicles (i.e. via vehicle-to-vehicle (V2V) communication protocols), remote servers (e.g. cloud servers as the devices described above in connection with Fig. 3 and 4), databases or other external devices, i.e. vehicle-to-infrastructure (V2I) or vehicle-to-everything (V2X) communication protocols. The communication system 526 may communicate using one or more communication technologies. The communication system 526 may comprise one or more antennas. Cellular communication technologies may be used for long-range communication such as to remote servers or cloud computing systems. In addition, if the cellular communication technology used have low latency, it may also be used for V2V, V2I or V2X communication. Examples of cellular radio technologies are GSM, GPRS, EDGE, LTE, 5G, 5G NR, and so on, also including future cellular solutions. However, in some solutions mid to short-range communication technologies may be used such as Wireless Local Area (LAN), e.g. IEEE 802.11 based solutions, for communicating with other vehicles in the vicinity of the vehicle 500 or with local infrastructure elements. ETSI is working on cellular standards for vehicle communication and for instance 5G is considered as a suitable solution due to the low latency and efficient handling of high bandwidths and communication channels.

The communication system 526 may further provide the possibility to send output to a remote location (e.g. remote server, operator or control center) by means of the one or more antennas. Moreover, the communication system 526 may be further configured to allow the various elements of the vehicle 500 to communicate with each other. As an example, the communication system may provide a local network setup, such as CAN bus, 12C, Ethernet, optical fibers, and so on. Local communication within the vehicle may also be of a wireless type with protocols such as WiFi, LoRa, Zigbee, Bluetooth, or similar mid/short range technologies.

The vehicle 500 further comprises a maneuvering system 520. The maneuvering system 528 is configured to control the maneuvering of the vehicle 500. The maneuvering system 528 comprises a steering module 530 configured to control the heading of the vehicle 500. The maneuvering system 528 further comprises a throttle module 532 configured to control actuation of the throttle of the vehicle 500. The maneuvering system 528 further comprises a braking module 534 configured to control actuation of the brakes of the vehicle 500. The various modules of the steering system 528 may receive manual input from a driver of the vehicle 500 (i.e. from a steering wheel, a gas pedal and a brake pedal respectively). However, the maneuvering system 528 may be communicatively connected to the ADS 510 of the vehicle, to receive instructions on how the various modules should act. Thus, the ADS 510 can control the maneuvering of the vehicle 500.

As stated above, the vehicle 500 comprises an ADS 510. The ADS 510 may be part of the control system 502 of the vehicle. The ADS 510 is configured to carry out the functions and operations of the autonomous functions of the vehicle 500. The ADS 510 can comprise a number of modules, where each module is tasked with different functions of the ADS 510.

The ADS 510 may comprise a localization module 512 or localization block/system. The localization module 512 is configured to determine and/or monitor a geographical position and heading of the vehicle 500, and may utilize data from the sensor system 520, such as data from the GNSS module 522. Alternatively, or in combination, the localization module 512 may utilize data from the one or more sensors 524. The localization system may alternatively be realized as a Real Time Kinematics (RTK) GPS in order to improve accuracy. In some embodiments, the localization module 512 may acquire the information indicative of a driven trajectory of the vehicle 500. For example, the localization module 512 may obtain geographic positional data of the vehicle, and potentially additional sensory data, and formalize this into a driven trajectory of the vehicle in a format used by the foundation model. In some embodiments, the data used for obtaining the information indicative of the driven trajectory may be transmitted to the server as raw, or partly processed data. The data may then be formulized at the server.

The ADS 510 may further comprise a perception module 514 or perception block/system. The perception module 514 may refer to any commonly known module and/or functionality, e.g. comprised in one or more electronic control modules and/or nodes of the vehicle 500, adapted and/or configured to interpret sensory data - relevant for driving of the vehicle 500 - to identify e.g. obstacles, vehicle lanes, relevant signage, appropriate navigation paths etc. The perception module 514 may thus be adapted to rely on and obtain inputs from multiple data sources, such as automotive imaging, image processing, computer vision, and/or in-car networking, etc., in combination with sensory data e.g. from the sensor system 520. The online perception model for performing a perception task of the vehicle may be provided as part of the ADS 510, or more specifically as part of the perception module 514.

The localization module 512 and/or the perception module 514 may be communicatively connected to the sensor system 520 in order to receive sensor data from the sensor system 520. The localization module 512 and/or the perception module 514 may further transmit control instructions to the sensor system 520.

The ADS may further comprise a path planning module 516. The path planning module 516 is configured to determine a planned path of the vehicle 500 based on a perception and location of the vehicle as determined by the perception module 514 and the localization module 512 respectively. A planned path determined by the path planning module 516 may be sent to the maneuvering system 528 for execution. The planned path may thus be construed as a path along which the vehicle should drive to e.g. reach its destination, obey traffic regulations, avoid obstacles etc. The planned path may thus correspond to a desired future path of the vehicle.

The ADS may further comprise a decision and control module 518. The decision and control module 518 is configured to perform the control and make decisions of the ADS 510. For example, the decision and control module 518 may decide on whether the planned path determined by the path-planning module 516 should be executed or not. The decision and control module 518 may be further configured to detect any deviating behavior of the vehicle, such as deviations from the planned path, or expected trajectory of the path planning module 516.

It should be understood that parts of the described solution may be implemented either in the vehicle 500, in a system located external to the vehicle, or in a combination of internal and external to the vehicle; for instance in a server in communication with the vehicle, a so called cloud solution. The different features and principles of the embodiments may be combined in other combinations than those described. Further, the elements of the vehicle 500 (i.e. the systems and modules) may be implemented in different combinations than those described herein.

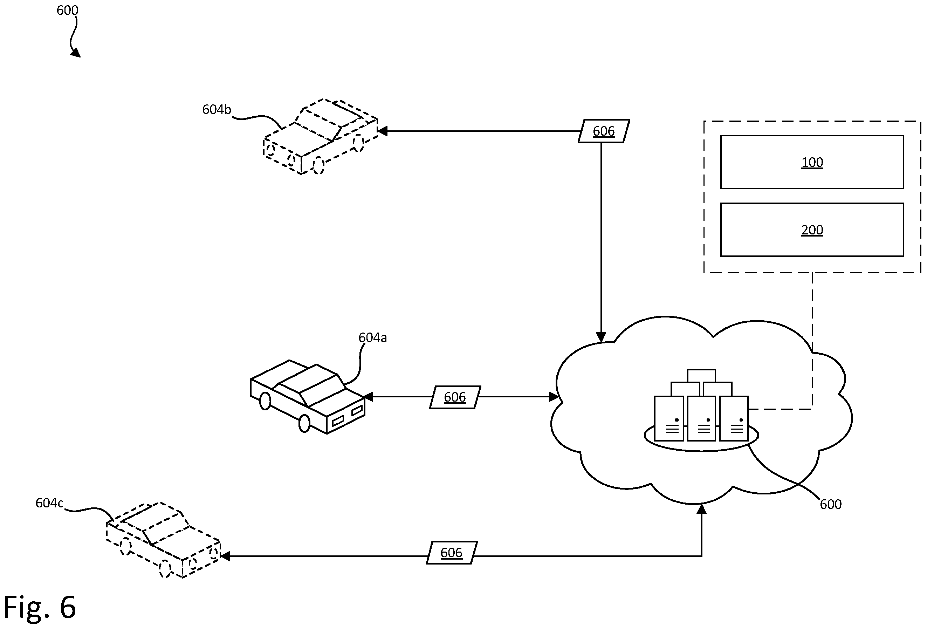

Figure 6 illustrates, by way of example, a distributed system 600 according to some embodiments. The system 600 should be seen as a non-limiting example of a realization of the herein disclosed aspects of the present inventive concept. For instance, the system 600 is configured to perform the method 100 as described above in connection with Fig. 1. The system 600 may be further configured to perform the method 200 as described above in connection with Fig. 2. Thus, any features or principles described above are applicable also to the system 600 as described herein and vice versa, unless otherwise stated.

The system 600 comprises a server 602 (or remote, cloud, central, back-office, fleet, or back-end server), referred to in the following as the remote server 602 or just server 602. The server 602 may be the device 300 as described in connection with Fig. 3, and/or the device 400 as described in connection with Fig. 4. In other words, the server 602 may be configured to perform the functions of the above described devices. Thus, the server 602 may be configured to perform the method 100 as described in connection with Fig. 1, and/or the method 200 described in connection with Fig. 2. As illustrated, the server 602 may be provided in the cloud, i.e. as a cloud-implemented server.

The system 600 further comprises one or more vehicles 604a-c, also referred to as a fleet of vehicles. The one or more vehicles 604a-c may be vehicles 500 as described above in connection with Fig. 5. Thus, the one or more vehicles 604a-c may be used for sensor data collection for use as training data. Moreover, the one or more vehicles 604a-c may be provided with the online perception model as described in the foregoing.

The one or more vehicles 604a-c are communicatively connected to the remote server 602 for transmitting and/or receiving data 606 between the vehicles and the server. The one or more vehicles 604a-c may be further communicatively connected to each other. The data 606 may be any kind of data, such as communication signals, or sensor data. The communication may be performed by any suitable wireless communication protocol. The wireless communication protocol may e.g. be long range communication protocols, such as cellular communication technologies (e.g. GSM, GPRS, EDGE, LTE, 5G, 5G NR, etc.) or short to mid-ranged communication protocols, such as Wireless Local Area (LAN) (e.g. IEEE 802.11) based solutions. The sever 602 comprises a suitable memory and control circuitry, for example, one or more processors or processing circuitry, as well as one or more other components such as a data interface and transceiver. The server 602 may also include software modules or other components, such that the control circuity can be configured to execute machine-readable instructions loaded from memory to implement the steps of the method to be performed.

The fleet illustrated in Fig. 6 comprises three vehicles, a first, second and third vehicle 604a-c, by way of example. The system 600 may however comprise any number of vehicles 604a-c. In the following, the system 600 will be described mainly with reference to the first vehicle 604a. It is to be understood that the principles applies to any vehicle of the fleet of vehicles.

In the following, an example of how the system 600 may perform the techniques according to some embodiments will be described. For further details regarding the different steps, reference is made to Fig. 1 and 2 above to avoid undue repetition.

In a first scenario, the server 602 performs the process of providing the offline perception model for subsequent annotation of training data. In such case, the server 602 performs the functions of the device 300 as described above in connection with Fig. 3. The data of the first dataset used in training the foundation model, as well as the data of the second training dataset used in fine-tuning of the offline perception model may be collected by the vehicles of the fleet of vehicles.

In a second scenario, the server 602 performs the process of annotating data for use in subsequent training of the online perception model. As explained above, the vehicle 604a may collect sensor data of a physical surrounding environment of the vehicle. The vehicle 604a may then transmit the collected sensor data to the server 602. Upon receiving the sensor data, the server may determine a perception output by inputting the obtained sensor data into the offline perception model. The server may then store the sensor data together with the perception output as annotation data for subsequent training of the online perception model. This process may be repeated for sensor data received from the fleet of vehicles until a sufficiently large dataset has been formed. The online perception model may then be trained (or re-trained) using the dataset. The online perception model may be trained at the edge, i.e. at the vehicle 604a. The sensor data together with the associated perception output may then be transmitted to the vehicle 604a. Alternatively, the online perception model may be trained at the server 602. An updated version of the online perception model after training may then be transmitted to the vehicles of the fleet of vehicles.

The above-described process of the system 600 is to be understood as a non-limiting example of the presently disclosed technology for improved understanding. Further variants are apparent from the present disclosure and readily realized by the person skilled in the art.

The present invention has been presented above with reference to specific embodiments. However, other embodiments than the above described are possible and within the scope of the invention. Different method steps than those described above, performing the methods by hardware or software, may be provided within the scope of the invention. Thus, according to an exemplary embodiment, there is provided a non-transitory computer-readable storage medium storing one or more programs configured to be executed by one or more processors of a vehicle control system, the one or more programs comprising instructions for performing the methods according to any one of the above-discussed embodiments. Alternatively, according to another exemplary embodiment a cloud computing system can be configured to perform any of the methods presented herein. The cloud computing system may comprise distributed cloud computing resources that jointly perform the methods presented herein under control of one or more computer program products.

It should be noted that any reference signs do not limit the scope of the claims, that the invention may be at least in part implemented by means of both hardware and software, and that the same item of hardware may represent several "means" or "units".

## Claims

1. A computer-implemented method (100) for providing an offline perception model for subsequent annotation of training data for use in training of an online perception model, the method (100) comprising:
training (S102) a foundation model, using a first training dataset, to predict a trajectory of a vehicle based on a sensor data sequence, wherein the sensor data sequence comprises sensor data pertaining to a surrounding environment of the vehicle, and wherein the first training dataset comprises sensor data sequences and information indicative of a driven trajectory associated with a respective sensor data sequence;
forming (S104) the offline perception model by adding a task-specific layer to the trained foundation model, wherein the task-specific layer is configured to perform a perception task of the offline perception model; and
fine-tuning (S106) the offline perception model, using a second training dataset, to perform the perception task, wherein the second training dataset comprises sensor data annotated for said perception task.

2. The method (100) according to claim 1, wherein the information indicative of the driven trajectory comprises data pertaining to a position of the vehicle for a number of subsequent time instances.

3. The method (100) according to claim 1 or 2, wherein the sensor data sequence comprises sensor data pertaining to the surrounding environment of the vehicle for a number of subsequent time instances.

4. The method (100) according to claim 3, wherein the sensor data comprises one or more of image data, LIDAR data, radar data or ultrasonic data.

5. The method (100) according to any one of the claims 1 to 4, wherein the first training dataset is an implicitly annotated dataset, and the second training dataset is an explicitly annotated dataset.

6. The method (100) according to any one of the claims 1 to 5, wherein the perception task is one of object detection, object classification, object tracking, lane estimation, free-space estimation, trajectory prediction, obstacle avoidance, scene classification, and traffic sign classification.

7. The method (100) according to any one of the claims 1 to 6, wherein training (S102) of the foundation model is performed by imitation learning, and
wherein fine-tuning (S106) of the offline perception model is performed by supervised learning.

8. A computer program product comprising instructions, which when the program is executed by a computing device, causes the computing device to carry out the method (100) according to any one of the claims 1 to 7.

9. A device (300) for providing an offline perception model for subsequent annotation of training data for use in training of an online perception model, the device (300) comprising control circuitry (302) configured to:
train a foundation model, using a first training dataset, to predict a trajectory of a vehicle based on a sensor data sequence, wherein the sensor data sequence comprises sensor data pertaining to a surrounding environment of the vehicle, and wherein the first training dataset comprises sensor data sequences and information indicative of a driven trajectory associated with a respective sensor data sequence;
form (S104) the offline perception model by adding a task-specific layer to the trained foundation model, wherein the task-specific layer is configured to perform a perception task of the offline perception model;
fine-tune the offline perception model, using a second training dataset, to perform the perception task, wherein the second training dataset comprises sensor data annotated for said perception task.

10. A computer-implemented method (200) for annotating data for use in subsequent training of an online perception model, wherein the online perception model is configured to perform a perception task of a vehicle equipped with an automated driving system, the method (200) comprising:
obtaining (S202) sensor data pertaining to a physical environment;
determining (S204) perception output by inputting the obtained sensor data into an offline perception model provided by the method (100) according to any one of the claims 1 to 7; and
storing (S206) the sensor data together with the perception output as annotation data for subsequent training of the online perception model.

11. The method (200) according to claim 10, further comprising transmitting (S208) the sensor data together with the perception output to the vehicle for subsequent training of the online perception model in the vehicle.

12. The method (200) according to claim 10 or 11, further comprising training (S210) the online perception model on the stored sensor data together with the perception output, thereby generating an updated online perception model.

13. The method (200) according to claim 12, further comprising transmitting (S212) the updated online perception model to the vehicle.

14. A computer program product comprising instructions, which when the program is executed by a computing device, causes the computing device to carry out the method (200) according to any one of the claims 10 to 13.

15. A device (400) for annotating data for use in subsequent training of an online perception model, wherein the online perception model is configured to perform a perception task of a vehicle equipped with an automated driving system, the device (400) comprising control circuitry (402) configured to:
obtain sensor data pertaining to a physical environment;
determine perception output by inputting the obtained sensor data into an offline perception model provided by the method (100) according to any one of the claims 1 to 7; and
store the sensor data together with the perception output as annotation data for subsequent training of the online perception model.
